# EUROPEAN PATENT APPLICATION

(11) **EP 1 884 340 A1**
(43) Date of publication of application: **06.02.2008**
(21) Application number: 07015081.8
(22) Date of filing: 01.08.2007
(51) Int. Cl.: B29C 47/50, B29C 47/92, B29C 45/04, B29C 33/36

(54) **Process and apparatus for extrusion moulding**

(30) Priority: 03.08.2006 EP 06425562
(71) Applicant: GM Inox S.r.l., 21026 Gavirate (VA) (IT)
(72) Inventor: Rossi, Alberto, 21026 Gavirate (VA) (IT); Morini, Matteo, 21026 Gavirate (VA) (IT)
(74) Representative: Gislon, Gabriele

(57) **Abstract**

A process for the molding of thermoplastic products in closed hollow molds, in which the thermoplastic material is continuously extruded from an extruder, fed by a feeding unit (10) comprising a plurality of injection nozzles (12) and injected without interrupting the operation of the extruder into at least one of a plurality of molds (9) mounted on means (13A-13C) that position them in succession on said nozzles (12) so that, during operation of the extruder, there is always at least one mold (9) of said plurality of molds in filling phase.

## Description

The present invention relates to a process and to an apparatus for extrusion molding. More specifically, the invention relates to a process and an apparatus for extrusion molding of thermoplastic articles in closed cavity molds.

Continuous extrusion molding processes are known in which the thermoplastic material is plasticized in a cylinder by means of one or more rotating screws that also have the function of pressurizing the material and pushing it through a die, or extrusion head, to provide the required extruded product.

Continuous extrusion molding of this type therefore involves the use of an "open" mold, that is, a shaped cavity through which the thermoplastic delivered from the extruder passes and which reproduces the shape thereof.

The problem with conventional extrusion processes is that they require subsequent processing of the extruded product, typically by cutting and finishing the extruded product.

Extrusion blow molding is known, in which the material is extruded in the form of a tube in a "closed" mold and subsequently blown to give a hollow product reproducing the shape of the mold.

Intermittent extrusion molding is known and characterized by two stages: the first, during which the material is extruded with a continuous flow in the "closed" mold, until said mold is filled; the second, during which the flow of thermoplastic produced by the extruder is stopped. With this process, the flow of thermoplastic takes place in alternating cyclical stages.

The process is known to obtain thermoplastic articles through injection molding.

An extrusion process is known, in which the cylindrical extruded article is closed between two half-molds mounted on opposing carousels that separate automatically after a distance travelled together. A series of gates or moving blades cut the extruded product to size. In this embodiment, therefore, the extrusion head delivers the extruded product into a moving mold which subdivides into a plurality of cavities aligned by means of the moving blades, until it opens completely and separates into two half-molds.

This solution has substantially the same drawbacks as conventional extrusion, for example: the cutting stage and the fact that it is impossible to mold shapes substantially more complex that those of an article with a regular shape. Moreover, the apparatus required is unavoidably bulky, as it must extend long enough to allow time for the piece present in the mold to cool before opening the same; similarly, the production speed is limited by the speed of the molds moving along the carousel, said speed in turn being dependent on the cooling speed of the piece in the mold.

DE 1217055 (dated 15.06.1960) describes a device in which the molds are positioned on a single rotating plate (6) that passes inside a furnace (10), and are connected to an extruder by means of flexible ducts (3) that must be fixed to the mold (5) and remain connected to it for the entire rotation of the plate. The ducts have a valve (4) to feed thermoplastic material into the mold; such valve is set at the extremity of the duct, fixed to the mold and mobile with it. This device is very primitive and involves very long molding times, because the molding cycle requires the molds to be heated and then cooled.

WO 03/076160 describes an extruder that is connected in turn to a series of molds mounted on a single vertical carousel. A single injector is associated to each extruder; when there are two injectors it is because a bi-component is being injected and therefore there are two extruders, one for each material. The teaching of this document is to use an accumulator reservoir for the melted polymer to avoid interrupting the operation of the extruder during the time of changing mold: because of this, the melted polymer is maintained at high temperatures for relatively long times risking to be degraded.

The object of the present invention is to solve the aforementioned problems and to provide a process and an apparatus that allows pieces with even complex outlines to be molded continuously and at high speed without stopping the extruder.

This object is attained by means of the invention that relates to a process for extrusion molding of individual pieces, characterized according to Claim 1.

According to one aspect of the invention, the extruder is operated continuously and preferably with constant pressure and flow-rate; for this purpose, the pressure of the material delivered from the extruder is increased or stabilized before feeding the material to the injection nozzles.

According to another aspect of the invention, the process involves feeding to the molding extruder metered quantities of the individual raw materials, that is, thermoplastic material (i.e. in powder), fillers, colorants, additives, plasticizers and similar products to produce the desired product directly without passing through the granulation stage. In other words, the invention makes it possible to exclude the plastic material granulation stage, which is a stage that must instead always be performed separately before any injection molding process.

The invention relates furthermore to an apparatus according to Claim 6.

According to the invention, the molds are divided into two or more groups which are mounted on two or more means of moving the molds. The nozzles are integral with the extruder by means of a feeding unit and they are so fixed in such a position to feed the thermoplastic from the feeding unit. The molds are therefore mobile with respect to the nozzles, as can be seen from the drawings and, according to the invention, at least one is always in the filling position on one of the injection nozzles.

According to a preferential aspect of the invention, there is a means of transporting a group of molds for each nozzle, or rather that there will be at least two means of transport for two nozzles, and three means of transport will correspond to three nozzles.

Preferably there are means of pressurization of the thermoplastic material, positioned between the extruder and the feeding unit, to increase and/or stabilize the pressure of the material delivered from said extruder before feeding it to the nozzles that inject it into the molds. Means suited for this purpose are, for instance, melt pumps.

According to another aspect of the invention, there are pressure sensors connected to a control unit and to a unit controlling the melt pump motor and of the extruder motor to obtain a constant pressure of the molten material fed to the nozzles.

According to another aspect of the invention, the extruder is equipped with a plurality of feed and metering means for the individual materials to be molded, that is, for the powdered thermoplastic, the filler, the additives, the pigments (masterbatches) and the like.

As mentioned above, the invention allows molding of finished pieces in closed cavity molds of the type utilized for injection molding, thereby obtaining pieces that have the desired outline and that do not have to undergo further cutting or other processing to reach the desired shape.

According to a further aspect of the invention, the molds are mounted on two or more kinematic mechanisms that carry the molds in succession to the nozzles, so that at least one mold is always in this position. In this way, while the mold in position is being filled, one or more molds are in the standby or positioning stage; as soon as the filling stage is finished, feed is transferred to the other mold (formerly in the standby or positioning stage which is then filled) and the mold already filled is moved towards a station for ejection of the molded piece. A new empty mold is carried to the free nozzle and put in stand-by.

In other words, the process of the invention provides for that the extruder is always injecting material into at least one closed cavity mold via one of the two or more injectors connected to the same extruder.

In this way the extruder can work continuously, preferably at constant speed, thereby differing from the prior art.

The invention consequently makes it possible to utilize a process for extrusion molding by means of injection nozzles in closed cavity molds and with all the advantages deriving from the use of an extruder in place of an injection press, obtaining finished pieces that have all the advantages of an injection molded piece.

It is possible to utilize two or more extruders on the same apparatus, for example to co-extrude different materials or the same material with different colors. Two or more extruders can also be used to mold in two different positions along the periphery of the rotating kinematic mechanisms: in this case, however, two or more injection nozzles are connected to each of the extruders.

A further advantage is that it is possible to obtain molded pieces, which were previously only obtainable by injection molding, starting from base materials, that is from the thermoplastic material, the fillers and the powder additives or masterbatches. In fact, thanks to the present invention the piece can be molded directly from the extruder that plasticized, metered and mixed the initial materials, without requiring granulate to be produced to be fed subsequently to an injection press.

The invention will now be described in greater detail with reference to the enclosed drawings provided by way of non-limiting example, in which:
Figure 1 is a schematic side view of the apparatus according to the invention;
Figure 2 is a schematic top view of the apparatus in Figure 1;
Figure 3 is a top view of the rotating tables and of the unit that operates them;
Figures 4-8 are side and partially sectional views of elements forming the feed unit;
Figure 9 is a schematic view of the system to control the pressure of the apparatus according to the present invention.

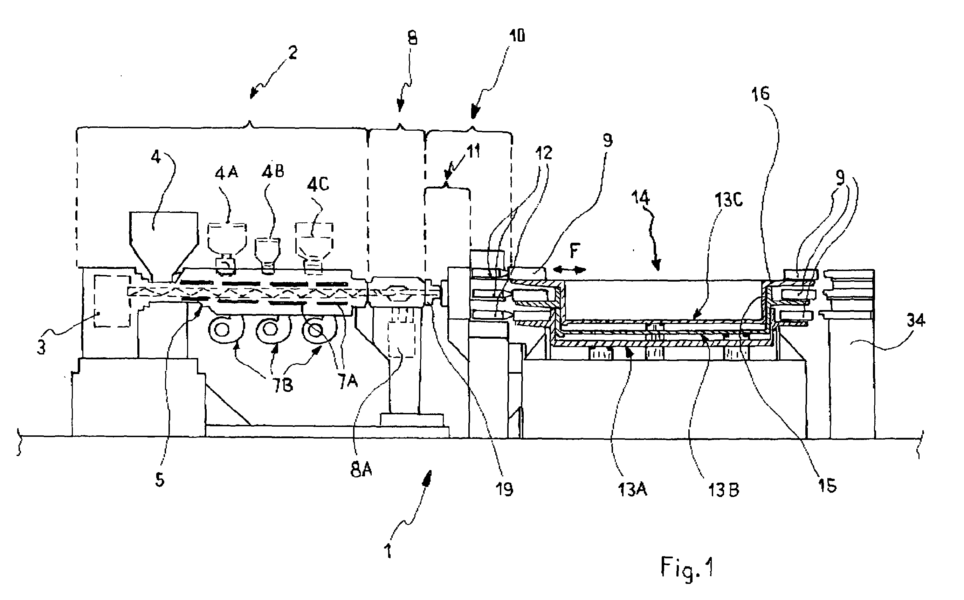

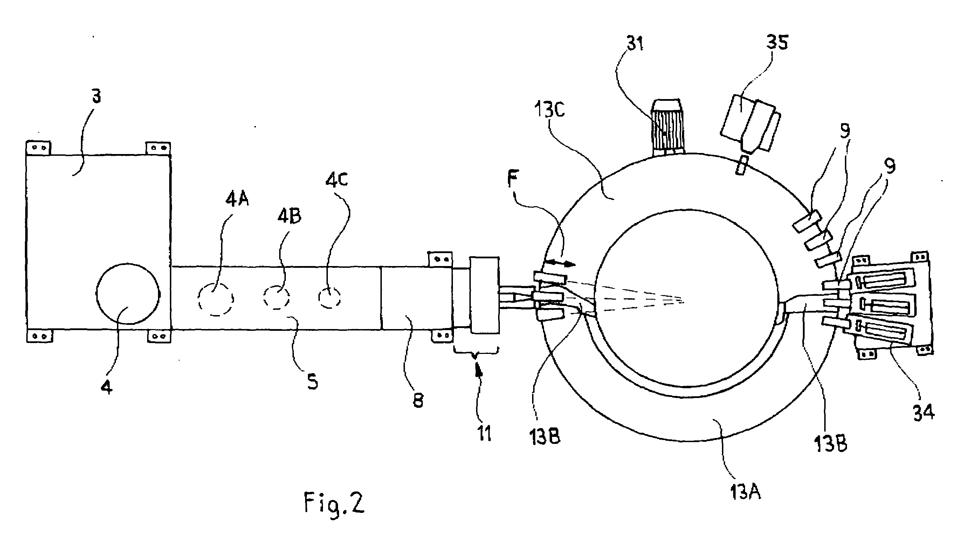

With initial reference to Figure 1 and to Figure 2, the apparatus 1, or facility, for extrusion molding of elements in thermoplastic material, comprises at least one extruder 2 in which said thermoplastic material is taken to a plastic state in a way known per se in the art. As shown, the extruder 2 comprises a motor 3, a hopper 4 to feed the thermoplastic material to the extruder and a conduit 5 in which one (or more) plasticizing screws 6 are present.

Conduit 5 is temperature controlled in a known way, for example by means of heating 7A and means of cooling 7B. Extruders suitable for the purpose are normally commercially available and are of the single/twin screw type, for example the extruders produced by the firm Costruzioni Meccaniche Luigi Bandera spa.

As mentioned previously, in alternative to a conventional hopper to feed granules already comprising fillers and various additives, the extruder 2 can be equipped with means of metering to feed the initial materials thereto: in other words, in this embodiment of the invention, the extruder (preferably a two-screw extruder) mixes the initial materials and produces the molten material which, upon delivery from the extruder, is carried to said plurality of nozzles 12 and from these injected into the molds 9. Extruders of the aforesaid type, i.e. provided with means of feeding controlled quantities of the initial materials to obtain the thermoplastic product with the desired composition upon delivery, are known in the art and are normally utilized to produce compounds, generally in the form of granules or pellets, having the desired formulation. This embodiment is indicated in Figure 1 and in Figure 2, by means of the references 4A-4C, with a dashed line.

The outlet of the extruder 2 is connected with means of pressurizing the thermoplastic material, positioned between said extruder 2 and the molds 9 feeding unit 10 to increase and/or stabilize the pressure of the material delivered from extruder 2. The purpose of means 8 is to increase and/or stabilize the pressure of the material delivered from the extruder 2 to a known value, constant and sufficient to fill the molds 9 according to the desired quantities.

Means suitable for this purpose are, for example, "melt pumps" such as those marketed by the Farcon firm. Typical values of the pressure of the material in extruder 2 range from 30 bar to 200 bar, and the pressure reached by the melt pump generally ranges from 100 bar to 250 bar. The pump 8 is operated by a variable speed brushless motor 8A. The motor 8A is preferably equipped with an encoder or similar means of determining and controlling the speed thereof.

As mentioned above, the melt pump 8 is connected to a feeding unit 10, comprising a material flow diverter 11 and a plurality of injection nozzles 12.

There are also a plurality of molds 9 and means of positioning 14 one or more of said molds on the nozzles in succession, i.e. to bring the molds 9 into alignment with said nozzles 12 and connecting them to each other, so that, during the operation of the extruder, at least one of said plurality of molds is always in the filling stage and a second mold is already in the positioning stage or already connected to another injection nozzle ready to be filled. The nozzles 12 are therefore fixed in relation to the molds, in the sense that molds are mobile on the means 14 while the nozzles are integral to the extruder and they remain firmly in the position shown, to which the molds are brought to be filled.

Means 14 of any type, such as turntable, carousel, belt or pallet conveyor can be used; in the embodiment shown, relating to the production of small-sized thermoplastic articles, the molds are mounted on three coaxial rotating tables.

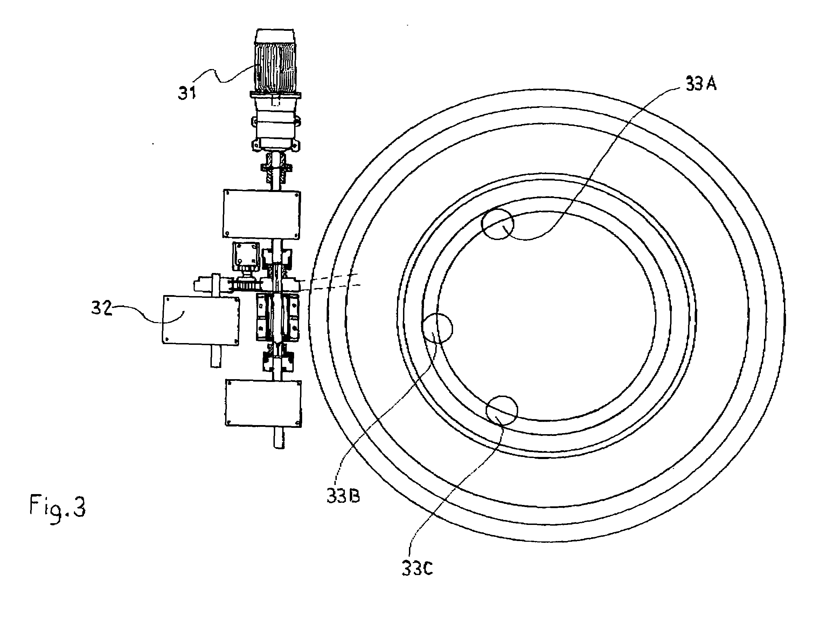

The embodiment shown in Figures 1-3 has three superimposed coaxial tables 13A-13B-13C. The molds 9 are positioned radially on the perimeter of the tables and are separated by an angle that depends on their dimensions, on the number of the molds and supporting tables and on the times set by the cooling cycle.

As can be seen from the figures, molds 9 are positioned on brackets 16 located on different levels, i.e. staggered vertically. Moreover, molds 9 are mounted on carriages or similar means that allow a translatory movement along the braket, as shown by the arrow F in Figures 1 and 2, so that they can be brought into connection with nozzles for the entire time that said nozzles 12 inject material into the mold.

Nozzles 12 are of the type known in the art, such as the Fuchslocher nozzle marketed by Thermec Italia, and are mounted on a supporting unit 17, on different levels corresponding to the levels of the brackets 16 of tables 13A-13B-13C. Associated with nozzles 12 are means of engaging and retaining the molds, such as clamps or similar means of gripping (or pushing) that grasp the mold 9 once it has been brought to the standby position and move it towards the nozzle 12 and retain it there for the entire filling stage thereof.

As mentioned above, the material delivered from the extruder 5 is fed to the melt pump 8 and from this it is taken to nozzles 12 by means of the flow diverter 11. The diverter unit 11 comprises two or more feed channels (three in the embodiment shown, which refers to an apparatus with three nozzles) which extend from the outlet of pump 8 to the inlet of each nozzle 12, and have characteristics that make it possible to prevent different load losses of the material from one nozzle to the other and which thereby guarantee even filling of the molds regardless of the nozzle to which the molds are connected. In other words, the unit 11 must keep the pressure of the material at a constant level in all the conduits until it reaches the molds. In this way it is possible, if necessary, as when working with material containing an expanding agent, to regulate the amount of product injected into each mold according to the pressure and injection time.

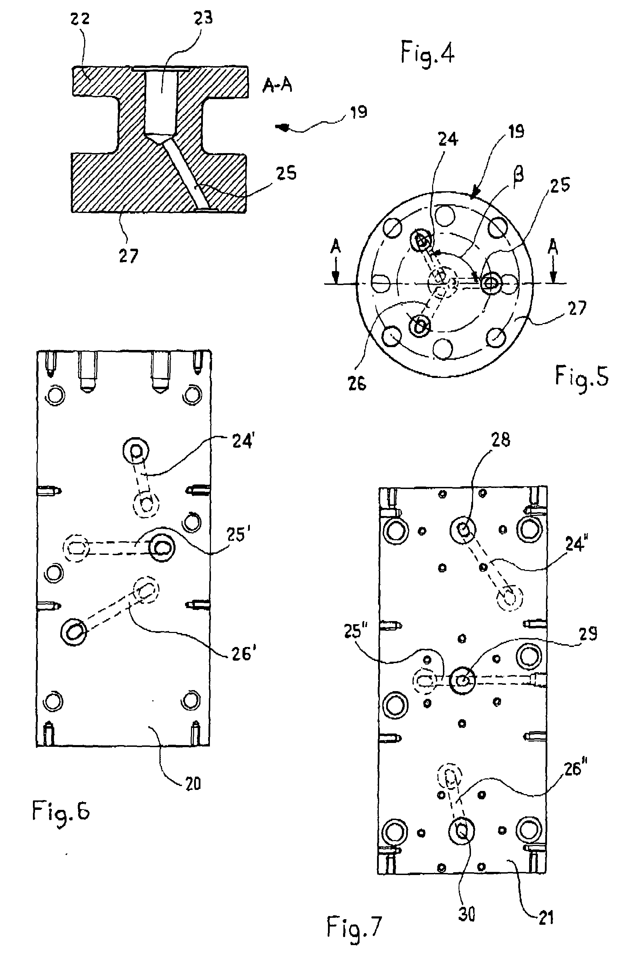

Figures 4-8 show a diverter unit designed to feed three nozzles for three identical molds; in other words, the quantities of material supplied by each nozzle must be identical for all three nozzles. The load losses for each conduit of the diverter unit must, obviously, be the same.

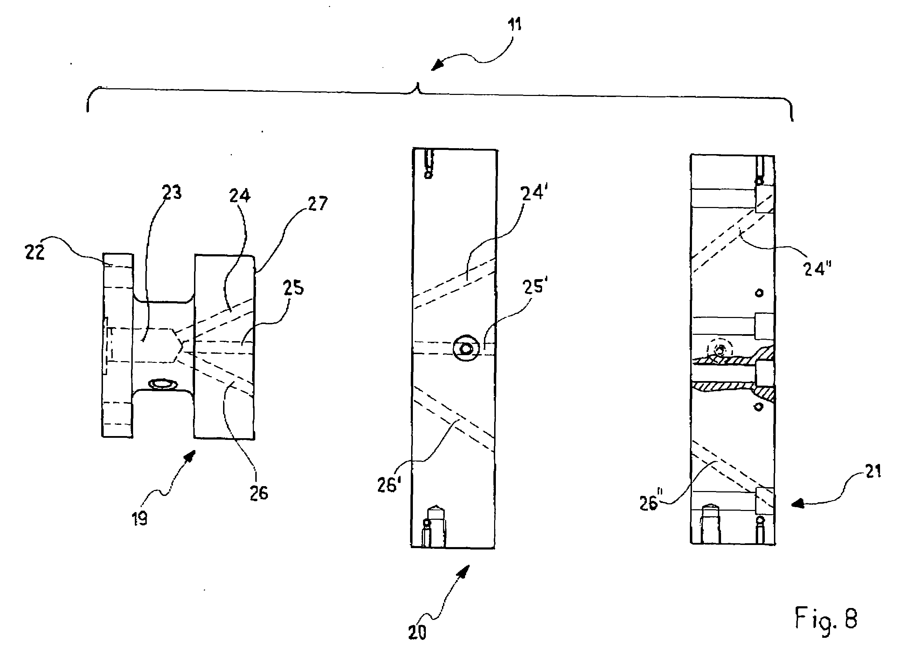

The diverter unit 11 comprises (as shown in the exploded view in Figure 8) three separate elements 19-21 which can be bound together. The first element 19 is placed at the outlet of the pump 8 and is fixed thereto with a flange 22; as can also be seen in Figures 4 and 5, the element 19 has an inlet conduit 23 which branches into three conduits 24-26 that diverge and have corresponding outlet holes at the flanged end 27, opposite to flange 22. The angle β between one conduit and the other (Figure 5), or between one outlet hole and the other, is 120°.

The outlets of conduits 24-26 on face 27 are in communication with extensions 24'-26' of said conduits via the second element 20 of the diverter unit. As can be seen in Figure 6, the extension of the conduits no longer follows the development of element 19, but follows different angles which, in combination with the subsequent third element 21 and the related conduits 24"-26", align the three final outlet holes vertically with one another (Figure 7). The respective mold feeding nozzles 12 are connected to the outlet holes 28-30.

As already mentioned, the diameters and lengths of the three conduits formed by the sections 24/24'/24" - 26/26'/26" are identical as they are intended to feed identical molds; in other embodiments of the invention, the molds 9 of each unit of those present (i.e. present on each table) can differ and require different quantities of material to be fed. In this case, the conduits of the diverter unit will be designed with different sections and/or lengths to give load loss values which are in any case identical for each conduit.

A further characteristic of the invention is the fact that the diverter-distributor unit 11 described above has no valves of any type, the only means to stop the flow of thermoplastic material being present in the nozzles 12.

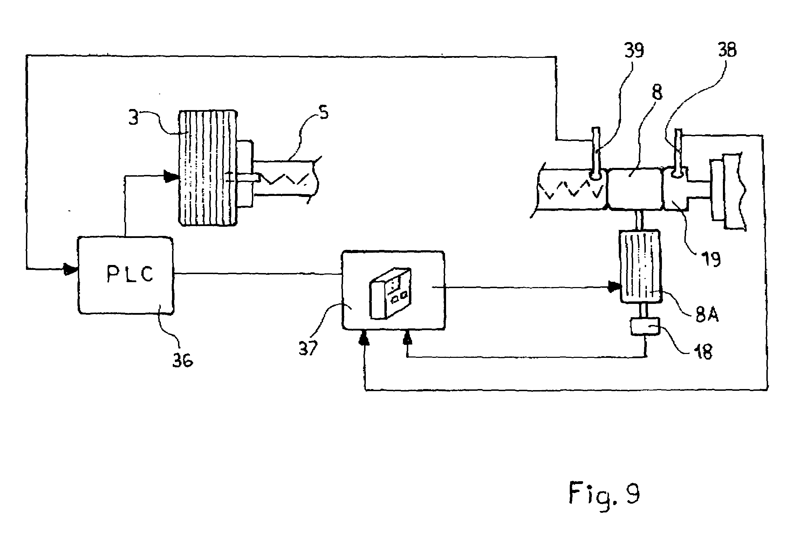

Figure 9 shows a diagram of the system to control the apparatus according to the present invention, which makes it possible to obtain the required constant pressure of the material fed to the nozzles 12.

Obtaining a constant pressure is particularly useful as, together with control of nozzle opening time, it allows very accurate and simple metering of the quantity of material fed to the mold, provided that the aforesaid load losses along the diverter/distributor 11 are identical in each duct. In this way it is not necessary to use control software that calculates all the other variables such as load losses, variations in flow at the nozzle outlet and the like.

As shown in Figure 9, the system according to the invention comprises a closed loop type system to control the pressure delivered from the pump 8, and an open loop control system for the pressure of the material delivered from the conduit 5 of the extruder 2. The closed loop control of the pressure delivered from the pump comprises a PLC or similar control unit 36, a drive 37 and a probe or pressure sensor 38 placed on the initial element 19 of the diverter 11, preferably upstream of the point at which the various conduits of the diverter branch off.

The probe 38 to measure the pressure on 19 is connected to the drive 37, which is in turn connected to motor 8A of pump 8 to control the operating parameters thereof. The motor 8A is a variable speed brushless motor with microsecond response, and is provided with an encoder 18 which is connected to the drive 37 to send signals relative to the motor speed values thereto.

The probe 38 is a probe substantially capable of continuously detecting the pressure value of the molten material delivered from pump 8. Suitable probes are, for example, those marketed by DYNISCO, which are capable of taking a reading every 5 milliseconds.

The operation happens as follows:

The probe measures the pressure in 19 every 5 msec and sends the corresponding signal to drive 37, which detects the value delivered by the probe, consequently calculates the voltage and current to give to the motor 8A to reach the required speed and therefore the required pressure, which is the value set (i.e. 250 bar) by the operator on the PLC 36.

In the meantime, the encoder 18 detects the effective speed of the motor 8A and sends a corresponding signal to the drive 37, which verifies whether the speed of the motor is the speed required to obtain the pressure required. If the speed of the motor is not correct, the drive 37 varies the operating parameters of the motor, voltage and current, to make the required corrections. Probe 38 and encoder 18 therefore collaborate with the drive 37 to regulate the speed of the motor 8A of the pump 8 until obtaining the required pressure (250 bar).

Control of extruder operation takes place with an open loop system comprising a probe 39 placed at the outlet of the conduit 5, upstream of the pump 8, to measure the pressure of the molten material delivered from the extruder; this probe or pressure sensor is similar to the one described above and is connected to the PLC 36 which is connected to the motor 3 of the extruder.

The probe 39 detects the pressure at the extruder outlet, generates a corresponding signal and sends it to the PLC 36, where the pressure at the extruder outlet, e.g. 50 bar, has been set. The PLC receives the pressure values and sends corresponding instructions to the motor of the extruder to maintain or modify the effective speed of the motor as a function of the speed required for the set pressure. In this case there is no feedback and the system is of the open loop type.

Continuing with the previous example, if the pressure set for the outlet of the extruder (probe 39) is 50 bar and the pressure at the outlet of the pump is set to 250 bar, the speed of the extruder 2 is consequently regulated by the PLC 36 to reach a pressure of 50 bar and the pump 8 increases the pressure to 250 bar.

If, instead, the pressure at the probe 39 is set to 250 bar, the pump 8 will merely stabilize this value and ensure constancy over time. For this purpose, it is also possible for the pump 8 to reduce the pressure delivered from the extruder by rotating at very low speeds.

If required, it is also possible to fit means of connecting, on the element 19, to a pressurized gas source with the function of expanding agent.

Returning now to Figures 1-3, the tables 13A-13C are made to rotate by means of a drive unit comprising a motor 31, three index drives 32 and a plurality of pinions (three in the embodiment shown) 33A-33C to transmit motion to the tables in a known way, i.e. by pulleys. The index drives are of a type commercially available (i.e. manufactured by the Colombo e Filippetti company) and have operating characteristics dictated by the type of molds present and by the type of molding.

The tables are supported on top of one another by means of bearings to provide rolling friction.

The apparatus 1 according to the invention also comprises (Figures 1 and 2) a unit 34 to eject the products from the molds 9 and a unit to remove swarf from said molds.

During operation, the thermoplastic material fed from the hopper 4 is taken to a plastic state in the conduit 5 by the screw 6 of the extruder and is then fed to the feed unit 10 comprising the flow distributor/diverter 11 and a plurality of injection nozzles 12.

Preferably, the material delivered from the conduit of the extruder is made to pass through a pump 8 or analogous means to increase and/or stabilize the pressure value of the material delivered from the extruder before feeding it to the nozzles 12.

Through the diverter/distributor 11, the flow of material is divided into two or more flows (three in the preferred embodiment shown) and sent to the nozzles 12. The conduits passing through the diverter/distributor 11 have characteristics that prevent the product from remaining in the conduit (which is heated to keep the product fluid) beyond the maximum dwell-time possible without deteriorating. In other words, the dwell-times of the material in the various conduits of said feed unit are below the deterioration time of said material.

In order for the extruder 2 to be operated in continuous operating mode and preferably at constant pressure, at all times during its operation at least one of the molds 9 is positioned at the nozzles 12.

In particular, during the filling of a mold (for example, on the upper table 13C) at least one mold on tables 13A or 13B is positioned or is in the stand-by position, connected to the respective nozzle 12 by the retaining means in Figure 9.

When the mold on table 13C has been filled, the corresponding nozzle closes and the nozzle connected for example to the mold on table 13B opens, while table 13C is rotated to carry a further mold into alignment with the nozzle that has just become free. Similarly, after the mold on table 13B has been filled, the mold on table 13A will be filled and the cycle is repeated again.

The process of the invention can thus be summarized as follows.

At the beginning of the process, there is a monocavity mold corresponding to every injection nozzle. In succession, one of the three nozzles 12 opens (filling phase) with the object of allowing some melted material to be delivered at a pre-arranged pressure, directly into monocavity mold 9. While the first nozzle is open, i.e. during the filling of the first mold, the second and the third molds are closed. When the first nozzle has ended the injection, therefore it closes, the second nozzle opens while the third one is still closed. Finally, when the second nozzle closes to end injection, the third nozzle opens, while the first one is closed. The productive cycle is continuous and repetitive.

The kinematic mechanism of the independent revolving tables (13A-13C) allows the movement of monocavity mold 9 in such way that a mold remains stopped for the time of the injection, while simultaneously the table on which the injection has just ended, rotates to change the mold. The other table instead has finished positioning the changed mold and is preparing for the injection. Thanks to such kinematic mechanism two tables are stopped and one is in motion to change the mold. Such process guarantees a continuous and constant flow, because there is always one of the three nozzles open (injection phase).

As mentioned above, there are two stations in positions distant from the nozzle in the moment in which the injection happens, i.e. when the table is stopped, one station handles the extraction of the swarf and the other the extraction of the cork.

The invention will now be described with reference to the following example.

### Example. Production of corks for wine bottles.

*The plant was designed for making corks for use in wine bottles using granules in polyethylene with mineral additive.*

*The material introduced into the plant becomes molten when it arrives in the zone of extrusion, through the use of electric resistance heaters at a temperature of around 200°C. Due to the extrusion screw, the molten material is induced to enter the melt pump 8 at a constant pressure of around 80*/*90 bar. The melt pump raises and stabilizes the pressure to 210*/*220 bar, thus guaranteeing the supply to the ducts of the diverter 11 and the three injection nozzles 12.*

*At the beginning of the process, a monocavity mold is found corresponding to each injection nozzle. In succession, one of the three nozzles 12 opens (phase of filling) with the object of allowing melted material at a pressure of 2101220 bar to enter directly into a monocavity mold 9. The molds are then moved as described above, bringing them to the nozzles 12 and removing them filled therefrom later, with progress staggered to always have a mold in filling phase without stopping the extruder and without using systems of buffer storage of the melted material, as happens instead in the known art.*

*With this process 6000 corks*/*hour are molded, i.e. with an injection time of around 1,66 seconds per cork. Productivity is equal to 36 kg*/*hour, therefore a weight of 6 grams per cork.*

Compared to the traditional process of molding, the process of extrusion of the invention gives high productivity and high quality end products and homogeneity of plastification guaranteed by a continuous uninterrupted process as molding. Furthermore, the material doesn't suffer thermal degradation caused by the molding "dead times". Furthermore, it is possible to get different types, shapes and different grammages of cork for every monocavity mold, because it is possible to electronically change the injection time of every single mold and likewise the grammage, due to the accurate control of the injection pressure obtainable with the melt pump 8. In fact, the melt pump allows response times to pressure variation in the order of some tenths of a second.

Furthermore, lower energy costs compared to the molding process are guaranteed.

The specification reported above applies to the end-product obtained in the example quoted, but it is however clearly possible to produce other end-products while maintaining the production process of the present invention unchanged.

## Claims

1. A process for extrusion molding of elements in thermoplastic material, wherein said thermoplastic material is taken to a plastic state in an extruder (2) and is then extruded continuously from said extruder and injected into at least one of a plurality of molds (9), without interruption of extruder operation, **characterized in that** it comprises the steps of feeding said thermoplastic material delivered from the extruder to a feeding unit (10) comprising two or more injection nozzles (12), and of moving said molds with respect to said nozzles to bring said molds in succession into correspondence with the same nozzles (12), said molds being mounted on two or more separate means (13A-13C) of transport and being moved with them so that, during operation of the extruder, there always is at least one mold (9) being filled by means of injection of thermoplastic material by at least one of said injection nozzles (12).

2. A process according to Claim 1, in which for every nozzle there is provided a corresponding means (13A-13C) of transporting molds carrying a plurality of molds (9) and in which during the filling phase of a mold (9) on one of the means of transporting (13A) said means of transport (13A) is maintained stopped and at least one of the remaining means of transport (13B, 13G) is in movement to move molds (9) present on it.

3. A process according to Claim 1 or 2, wherein said thermoplastic material delivered from said extruder (2) is fed through means (8) to increase and/or stabilize the pressure of said material before feeding it to said injection nozzles (12).

4. A process according to Claim 1, 2 or 3, **characterized by** the fact that said extruder is operated at constant pressure.

5. A process according to Claim 3 or 4, further comprising the steps of detecting the pressure of the material delivered from said means (8) to increase and/or stabilize the pressure of the material, detecting the speed of motor (8A) of said means (8), sending said signals to means (37) of controlling and regulating the speed of said motor (8) as a function of the pressure detected to obtain the desired pressure.

6. An apparatus for extrusion molding of elements in thermoplastic material, comprising at least one extruder (2) where said thermoplastic material is taken to a plastic state, **characterized in that** it also comprises a feeding unit (10) provided with two or more injection nozzles (12) fixed in position adjacent to said extruder, a plurality of molds (9) mobile with respect to said injection nozzles (12), said molds being mounted on two or more separate means (13A - 13C) of transport and being moved with them to be positioned on said nozzles (12) in succession so that, during operation of the extruder, there is always at least one mold (9) being filled by means of injection of thermoplastic material by at least one of said injection nozzles (12).

7. An apparatus according to Claim 6, in which for every nozzle (12) there is provided a corresponding means (13A-13C) of transporting molds carrying a plurality of molds (9) and in which during the filling phase of a mold (9) on one of the means of transport (13A) said means of transport (13A) is maintained stopped and at least one of the remaining means of transport (13B, 13C) is in movement to move molds (9) present on it.

8. An apparatus according to Claim 6 or 7, comprising furthermore means (8) of pressurizing and/or stabilizing the thermoplastic material, positioned between said extruder (2) and said feeding unit (10), to increase and/or to stabilize the pressure of the material delivered from said extruder (2) and entering said feeding unit.

9. An apparatus according to any of Claims 6 to 8, wherein said pressurizing and/or stabilizing means (8) comprise a melt pump and a motor (8A) for said pump, further comprising means (38) of detecting the pressure of the material delivered from said means (8) to increase and/or stabilize the pressure of the material, means (18) of detecting the speed of the motor (8A) of said means (8), drive means (37) of said motor (8A) to receive said signals and to regulate the speed of said motor (8) as a function of the pressure detected to obtain the pressure desired for said material.

10. An apparatus according to any of Claims 6 to 9, wherein said injection nozzles are staggered in position.

11. An apparatus according to any of Claims 6 to 10, wherein said feeding unit comprises two or more feeding channels.

12. An apparatus according to any of Claims 6 to 11, further comprising means of transporting and retaining a mold in contact with the respective nozzle during said standby or filling phase.

13. An apparatus according to any of Claims 6 to 12, further comprising a plurality of means (4-4C) of metering the materials required for the thermoplastic composition to be injected into said molds (9), said means of metering being connected to said extrusion cylinder (5).
